# EUROPÄISCHE PATENTSCHRIFT

(11) **EP 1 004 116 B1**
(45) Veröffentlichungstag und Bekanntmachung des Hinweises auf die Patenterteilung: **27.11.2002**
(21) Anmeldenummer: 98949910.8
(22) Anmeldetag: 18.08.1998
(51) Int. Cl.: G11B 7/24, G11B 7/00, G06K 19/077

(54) **COMPACTDISC IM SCHECK- ODER VISITENKARTENFORMAT**
COMPACT DISC IN CHECK OR BUSINESS CARD FORMAT
DISQUE COMPACT A FORMAT DE CHEQUE OU DE CARTE DE VISITE

(30) Priorität: 19.08.1997 DE 29714719 U
(43) Veröffentlichungstag der Anmeldung: 31.05.2000
(73) Patentinhaber: Adivan High Tech AG, 8855 Wangen (CH)
(72) Erfinder: Starke, Olaf, 53940 Hellenthal (DE)
(74) Vertreter: Patentanwälte Feldmann & Partner AG
(86) Internationale Anmeldenummer: DE9802394
(87) Internationale Veröffentlichungsnummer: WO99009554

(56) Entgegenhaltungen:
- EP-A- 0 230 069
- EP-A- 0 521 778
- DE-A- 19 607 565
- DE-U- 29 616 619
- US-A- 5 119 353
- PATENT ABSTRACTS OF JAPAN vol. 014, no. 138 (P-1022), 15. März 1990 & JP 02 003118 A (CANON INC), 8. Januar 1990
- PATENT ABSTRACTS OF JAPAN vol. 016, no. 218 (P-1357), 21. Mai 1992 & JP 04 040586 A (NIPPON TELEGR & TELEPH CORP), 10. Februar 1992

## Beschreibung

Die Erfindung betrifft eine Compactdisc im Scheck- oder Visitenkartenformat, bei der auf mindestens einer Seite eine Compactdisc-Oberfläche ausgebildet ist.

Eine derartige Compactdisc ist aus der DE 296 16 619 U1 bekannt. Die Compactdisc kann in übliche CD-ROM-Laufwerke oder CD-Player eingelegt werden, so daß auf die auf der Compactdisc gespeicherte Information Zugriff in der üblichen Weise möglich ist. Allerdings hat die Compactdisc den Nachteil, daß sie wegen der sehr inhomogenen Masseverteilung auf dem CD-Trägerteller unruhig läuft.

Es ist die Aufgabe der Erfindung, die gattungsgemäße Compactdisc im Scheck- oder Visitenkartenformat so weiterzubilden, daß die Möglichkeiten als Informationsträger nicht eingeschränkt werden und insbesondere ein störungsfreies Laufen in handelsüblichen CD-ROM-Laufwerken oder CD-Playern möglich ist.

Diese Aufgabe wird von einer Compactdisc nach Anspruch 1 gelöst. Vorteilhafte Ausgestaltungen sind Gegenstand der Unteransprüche.

Erfindungsgemäß ist vorgesehen, daß die Compactdisc ein Hauptträgerteil und ein Abbruchteil aufweist, wobei die Compactdisc-Oberfläche zentriert auf dem Hauptträgerteil angeordnet ist und jede Diagonale des Hauptträgerteils eine Länge hat, die dem Durchmesser der Einlagenvertiefung eines CD-ROM-Laufwerks oder eines CD-Players entspricht.

Eine Compactdisc im Scheck- oder Visitenkartenformat hat beispielsweise die Abmessungen 5,4 cm x 8,4 cm, wobei der Hauptträgerteil Abmessungen von 5,4 cm x 6 cm und der Abbruchteil Abmessungen von 5,4 cm x 2 cm hat. Die Länge jeder Diagonale eines somit zwar immer noch im wesentlichen rechteckigen Hauptträgerteils mit aber fas identischen Kantenlängen ist dann 8 cm, was dem Durchmesser der Einlagenvertiefung auf dem Abspielteller eines CD-Players oder eines CD-ROM-Laufwerks entspricht. Durch die bessere Annäherung der Form des Hauptträgerteils an eine kreisförmige Scheibe wir der Lauf der Compactdisc ruhiger.

Nach einer besonderen Ausgestaltung sind der Hauptträgerteil und der Abbruchteil über eine Sollbruchstelle miteinander verbunden. Bevorzugt verläuft dabei die Sollbruchstelle entlang einer Linie senkrecht zu einer gemeinsamen Seitenkante von Hauptträgerteil und Abbruchteil. Die Compactdisc kann dann beispielsweise auch als Eintrittskarte oder Ticketkarte verwendet werden, da man mit dem Abtrennen des Abbruchteils die Karte entwerten kann.

Insbesondere für derartige Anwendungen ist es vorteilhaft, wenn auf dem Hauptträgerteil und/oder dem Abbruchteil integrierte Schaltungen, ein Computerchip, ein scanbarer Code und/oder ein Magnetstreifen vorgesehen sind, welche ablesbare Daten halten, die herkömmlich oder über Lasergeräte erfaßt und abgelesen werden können.

Um den Eindruck als Visitenkarte oder Scheckkarte zu verstärken, sollte die Länge der kürzeren Seite des Hauptträgerteils der Länge der längeren Seite des Abbruchteils entsprechen.

Die Erfindung nutzt die Tatsache aus, daß Compactdiscs vom Zentrum nach außen hin abgespielt werden. Man kann damit auf der erfindungsgemäßen Compactdisc große Datenmengen speichern, die in CD-Playern und CD-ROM-Laufwerken abgespielt bzw. abgerufen werden können. Auch das Abspielen von Audiotext, Bildern, Musik und dergleichen ist möglich.

Im folgenden soll die Erfindung anhand der beigefügten Zeichnungen beschrieben werden. Dabei zeigt:
- Figur 1: eine Draufsicht auf eine Compactdisc im Scheck- oder Visitenkartenformat gemäß der vorliegenden Erfindung;
- Figur 2: die Compactdisc aus Figur 1 mit abgeknicktem Abbruchteil; und
- Figur 3: den Hauptträgerteil der Compactdisc in Relation zu der Einlagenvertiefung eines CD-Players.

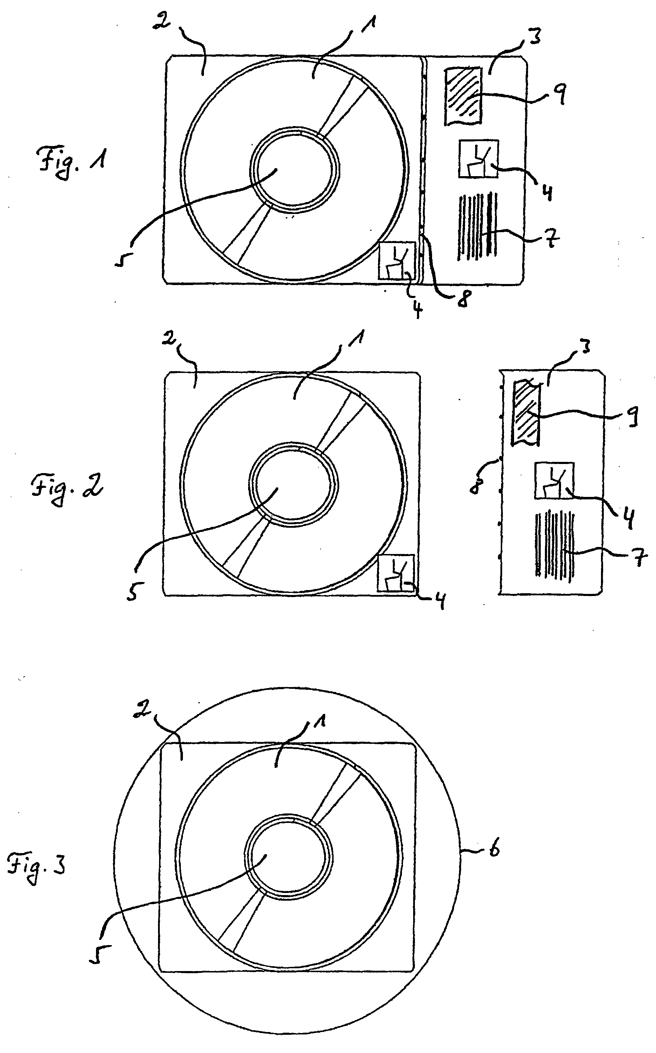

In Figur 1 besteht die Compactdisc aus einem Hauptträgerteil 2, auf dem zentriert eine Compactdisc-Oberfläche angeordnet ist, die in üblicher Weise ein Zentralloch 5 aufweist. Weiter vorgesehen auf dem Hauptträgerteil 2 ist ein Computerchip 4, in dem zusätzlich Daten abgelegt und gegebenenfalls auch verarbeitet werden können. Über eine Sollbruchlinie 8 ist an dem Hauptträgerteil 2 ein Abbruchteil 3 festgelegt, auf dem ebenfalls ein Computerchip 4, ein scanbarer Code 7 und ein Magnetstreifen 9 angeordnet sind. Die Compactdisc insgesamt ist im wesentlichen rechteckig und hat ähnliche Abmessungen wie eine übliche Scheckkarte oder Visitenkarte.

Figur 2 zeigt die entlang der Sollbruchlinie 8 geknickte Compactdisc, bei der nun der Abbruchteil 3 getrennt vorliegt und gegebenenfalls weggeworfen wird. Die für den Benutzer wichtige Information liegt auf dem Hauptträgerteil 2 vor, dieser Teil wird im Regelfall für den Zugriff auf die Daten auf der Compactsdisc-Oberfläche 1 aufbewahrt werden.

Wie Figur 3 zeigt, hat der Hauptträgerteil 2 Abmessungen, die es ermöglichen, daß er in die Einlagenvertiefung eines CD-Players oder eines CD-ROM-Laufwerks eingelegt wird. Üblicherweise haben solche Einlagenvertiefungen einen Durchmesser von 8 cm, dieses ist auch die Länge jeder der Diagonalen des Hauptträgerteils 2. Wegen der nun nahezu quadratischen Form ist die Masserverteilung in der Einlagenvertiefung gegenüber der Compactdisc des Standes der Technik viel homogener, so daß ein gleichmäßigeres Abspielen bzw. ein ruhiger Lauf des Gerätes ermöglicht wird.

## Patentansprüche

1. Compactdisc im Scheck- oder Visitenkartenformat, bei der auf mindestens einer Seite eine Compactdisc-Oberfläche ausgebildet ist,
**dadurch gekennzeichnet, daß** sie ein Hauptträgerteil (2) und ein Abbruchteil (3) aufweist, wobei die Compactdisc-Oberfläche (1) zentriert auf dem Hauptträgerteil (2) angeordnet ist und jede Diagonale des Hauptträgerteils (2) eine Länge hat, die dem Durchmesser (6) der Einlagenvertiefung eines CD-ROM-Laufwerks oder eines CD-Players entspricht.

2. Compactdisc nach Anspruch 1, **dadurch gekennzeichnet, daß** der Hauptträgerteil (2) und der Abbruchteil (3) über eine Sollbruchstelle (8) miteinander verbunden sind.

3. Compactdisc nach Anspruch 2, **dadurch gekennzeichnet, daß** die Sollbruchstelle (8) entlang einer Linie senkrecht zu einer gemeinsamen Seitenkante von Hauptträgerteil (2) und Abbruchteil (3) verläuft.

4. Compactdisc nach einem der Ansprüche 1 bis 3, **dadurch gekennzeichnet, daß** auf dem Hauptträgerteil (2) integrierte Schaltungen, ein Computerchip (4), ein scanbarer Code (7) und/oder ein Magnetstreifen (9) vorgesehen sind.

5. Compactdisc nach einem der Ansprüche 1 bis 4, **dadurch gekennzeichnet, daß** auf dem Abbruchteil (3) integrierte Schaltungen, ein Computerchip (4), ein scanbarer Code (7) und/oder ein Magnetstreifen (9) vorgesehen sind.

6. Compactdisc nach einem der Ansprüche 1 bis 5, **dadurch gekennzeichnet, daß** die Länge der kürzeren Seite des Hauptträgerteils (2) der Länge der längeren Seite des Abbruchteils (3) entspricht.

## Claims

1. A compact disc in bank card or business card format, in which on at least one side there is formed a compact disc surface, **characterised in that** it comprises a main carrier part (2) and a break-off part (3), wherein the compact disc surface (1) is arranged centered on the main carrier part (2) and each diagonal of the main carrier part (2) has a length which corresponds to the diameter (6) of the inlay deepening of a CD-ROM drive or of a CD player.

2. A compact disc according to claim 1, **characterised in that** the main carrier part (2) and the break-off part (3) are connected to one another via a break-off location (8).

3. A compact disc according to claim 2, **characterised in that** the break-off location (8) runs along a line perpendicular to a common side edge of the main carrier part (2) and the break-off part (3).

4. A compact disc according to one of the claims 1 to 3, **characterised in that** on the main carrier part (2) there are provided integrated circuits, a computer chip (4), a scannable code (7) and/or a magnetic strip (9).

5. A compact disc according to one of the claims 1 to 4, **characterised in that** on the break-off part (3) there are provided integrated circuits, a computer chip (4), a scannable code (7) and/or a magnetic strip (9).

6. A compact disc according to one of claims 1 to 5, **characterised in that** the length of the shorter side of the main carrier part (2) corresponds to the length of the longer side of the break-off part (3).

## Revendications

1. Disque compact à format de chèque ou de carte de visite, sur au moins un côté duquel est configurée une surface de disque compact,
**caractérisé en ce qu'**il présente une partie porteuse principale (2) et une partie détachable (3), la surface de disque compact (1) étant centrée sur la partie porteuse principale (2) et chaque diagonale de la partie porteuse principale (2) ayant une longueur qui correspond au diamètre (6) du renfoncement d'insertion d'un lecteur de cédéroms ou d'un lecteur de disques audionumériques.

2. Disque compact selon la revendication 1, **caractérisé en ce que** la partie porteuse principale (2) et la partie détachable (3) sont mutuellement reliées par une zone de rupture privilégiée (8).

3. Disque compact selon la revendication 2, **caractérisé en ce que** la zone de rupture privilégiée (8) s'étend le long d'une droite perpendiculaire à une arête latérale commune de la partie porteuse principale (2) et de la partie détachable (3).

4. Disque compact selon l'une des revendications 1 à 3, **caractérisé en ce que** des circuits intégrés, une puce électronique (4), un code barres (7) et/ou une bande magnétique (9) sont prévus sur la partie porteuse principale (2).

5. Disque compact selon l'une des revendications 1 à 4, **caractérisé en ce que** des circuits intégrés, une puce électronique (4), un code barres (7) et/ou une bande magnétique (9) sont prévus sur la partie détachable (3).

6. Disque compact selon l'une des revendications 1 à 5, **caractérisé en ce que** la longueur du petit côté de la partie porteuse principale (2) correspond à la longueur du grand côté de la partie détachable (3).
